# EUROPEAN PATENT SPECIFICATION

(11) **EP 1 553 258 B1**
(45) Date of publication and mention of the grant of the patent: **01.12.2010**
(21) Application number: 04100075.3
(22) Date of filing: 12.01.2004
(51) Int. Cl.: E06B 9/40, E06B 9/58, B60J 1/20

(54) **Winding mechanism for a sun screen and sun screen provided therewith**
Aufwickeleinrichtung für eine Blende und Blende mit einer solchen Aufwickeleinrichtung
Mécanisme d'enroulement pour un store et store avec un tel mécanisme

(43) Date of publication of application: 13.07.2005
(73) Proprietor: Inalfa Roof Systems Group B.V., 5804 AH Venray (NL)
(72) Inventor: Snellenberg, Ronny, Marinus, Jacobus, 5708 DM, Helmond (NL)
(74) Representative: Voncken, Bartholomeus Maria Ch.

(56) References cited:
- WO-A-03/106801
- DE-A1- 3 330 351
- FR-A- 2 631 374

## Description

The invention relates to a sun screen assembly according to the preamble of claim 1.

Such a sun screen assembly is known from FR-A-2 631 374 in which the sun screen is shaped as a parallelogram.

It is an object of the present invention to provide an improved sun screen assembly of the type referred to above.

Thus, in accordance with the present invention a sun screen assembly is provided having the characteristics of claim 1.

Because the winding tube is longitudinally movable relative to the central axis, it is possible to move the winding tube in such a way that the profiles of successive windings of the sun screen on said winding tube are off-set relative to each other, such that a regular winding of the sun screen on the winding tube is obtained. Because the profiles of the lateral sun screen edges have complementary upper and lower sides, such that the upper and lower sides of said profiles of subsequent windings of the sun screen on the winding tube cooperate, the cooperation between the upper and lower sides of subsequent winding profiles of the sun screen results in a well-determined winding of the sun screen with well-defined pitch. The choice of a particular profile at the lateral edges now is less critical, which makes the winding mechanism (and thus the sun screen) less costly.

Further, as stated, the central axis includes an angle with the transverse axis of the sun screen. Because of said angle the winding force in the longitudinal direction of the sun screen will have a component in parallel to the central axis, which component defines a driving force for moving the winding tube longitudinally relative to the central axis. As a result, the sun screen will automatically wind on to the winding tube with successive windings (and thus successive profiles) being off-set relative to each other.

Preferably the profile at one lateral edge is shaped as an upwardly angled section, whereas the profile at the opposite lateral edge is shaped as a downwardly angled section. Such upwardly and downwardly angled sections enable winding the sun screen on the winding tube with off-said subsequent windings with optimally engaging profiles at both lateral ends of the sun screen.

The angle between the central axis and the transverse axis of the sun screen generally will be at most 5°, and most preferably will be 2°.

Preferably, the driving force for moving the winding tube longitudinally relative to the central axis is generated by cooperating provisions on said winding tube and central axis. Such a driving force may be an additional driving force apart from the driving force generated by the sun screen.

Such cooperating provisions on said winding tube and central axis could comprise, for example, thread means.

The sun screen assembly according to the present invention may have many uses, but preferably it is intended for use in an open roof construction for a vehicle.

Hereinafter the invention will be elucidated referring to the drawing, in which an embodiment of a winding mechanism according to the present invention is illustrated.
Fig. 1 shows, schematically, a top plan view of an embodiment of a winding mechanism with sun screen in accordance with the present invention;
Fig. 2 shows the section according to II-II in Fig. 1, and
Fig. 3 shows, on a slightly larger scale, a longitudinal section through a winding tube with sun screen wound thereon according to the present invention.

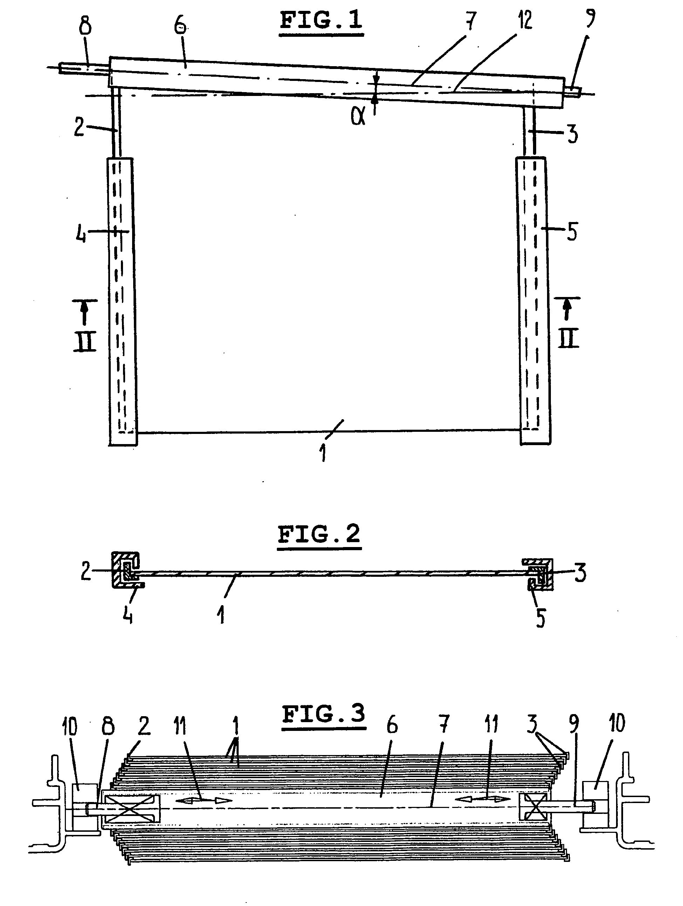

Fig. 1 shows, in a top plan view, schematically a sun screen 1 having two opposite lateral edges which are provided with profiles 2 and 3. Said profiles 2, 3 are slidingly housed in corresponding guides 4, 5 extending along said lateral edges of the sun screen 1.

As illustrated in Fig. 2 profile 2 at one lateral edge is shaped as an upwardly angled section, whereas profile 3 at the opposite lateral edge is shaped as a downwardly angled section. Of course, the guides 4, 5 are correspondingly shaped. As a result, the lateral edges of the sun screen 1 can not disengage laterally from the guides 4, 5. The winding mechanism further comprises a winding tube 6 which comprises driving means (not shown) for said winding tube. Such driving means may comprise a torsion spring positioned inside of the winding tube 6.

The winding tube 6 is rotatably mounted about a central axis 7.

Referring to Fig. 3, a longitudinal section of the winding tube 6 is illustrated. The winding tube is slidably mounted on stub axles 8, 9 which, in a manner known per se, are journalled in stationary bearings 10. As a result the winding tube 6 not only can rotate around the central axis 7, but also is longitudinally movable relative to the central axis 7 as indicated by arrows 11. In the situation illustrated in Fig. 3 the winding tube 6 has moved to an extreme left position relative to the stationary bearings 10 and stub axles 8, 9.

Again referring to Fig. 1, one can see that the central axis 7 of the winding tube 6 includes an angle α with the transverse axis 12 of the sun screen 1. Preferably said angle is 2°.

As a result of the angle α the sun screen 1 will be wound on the winding tube 6 as illustrated in Fig 3. Successive windings of the sun screen 1 are off-set relative to each other, such that successive profiles 2 and successive profiles 3 of successive windings are relatively off-set in the manner shown in Fig. 3. During winding of the sun screen 1 onto the winding tube 6, the latter will move longitudinally relative to the central axis 7 in correspondence with the pitch, which depends on the selected angle α.

Because of the angle α any winding force acting on the sun screen 1 and generated by the winding tube 6 will have a component in parallel to the central axis 7, which component will lead to the said longitudinal movement of the winding tube 6 relative to the central axis 7. Thus, any additional driving means for moving the winding tube 6 are not necessary. However, in certain instances, which do not form part of the subject-matter of the appended claims, (for example when angle α is 0°) a driving force for moving the winding tube 6 can be generated by cooperating provisions on the winding tube 6 and central axis 7, such as for example thread means (not illustrated).

Because of the selected shape, the profiles 2 and 3 (which in the present case are shaped as upwardly and downwardly angled sections) have complementary upper and lower sides, such that the upper and lower sides of said profiles 2, 3 of subsequent windings of the sun screen 1 on the winding tube 6 will cooperate in a manner as clearly shown in Fig. 3. Such a cooperation will contribute to a proper winding of the sun screen with relatively off-set subsequent windings, while the winding tube 6 moves along the central axis 7.

Preferably the winding mechanism and sun screen are used in an open roof construction for a vehicle.

## Claims

1. Sun screen assembly, comprising a sun screen (1) and a sun screen winding mechanism comprising a winding tube (6) being rotatably mounted about a central axis (7) and driving means for said winding tube, the winding tube being longitudinally movable relative to the central axis, and wherein the central axis (7) includes an angle (α) with the transverse axis (12) of the sum screen (1). **characterised in that** the sun screen has two opposite lateral edges which are provided with profiles (2,3) that are slidingly housed in corresponding guides (4, 5) extending along said lateral edges of the sun screen, wherein the profiles (2, 3) of the lateral sun screen edges have complementary upper and lower sides, such that the upper and lower sides of said profiles of subsequent windings of the sun screen (1) on the winding tube (6) cooperate and wherein the angle (α) is more than 0° and not more than 5°.

2. Sun screen assembly according to claim 1, wherein the profile (2) at one lateral edge is shaped as an upwardly angled section, whereas the profile (3) at the opposite lateral edge is shaped as a downwardly angled section.

3. Sun screen assembly according to claim 1 or 2, wherein said angle (α) is 2°.

4. Sun screen assembly according to one of the previous claims, wherein a driving force for moving the winding tube longitudinally relative to the central axis is generated by cooperating provisions on said winding tube (6) and central axis (7).

5. Sun screen assembly according to claim 4, wherein said cooperating provisions comprise thread means.

## Patentansprüche

1. Sonnenabschirmeinrichtung, aufweisend eine Sonnenabschirmung (1) und einen Sonnenabschirmungs-Wickelmechanismus, der aufweist: ein Wickelrohr (6), das um eine Zentralachse (7) drehbar montiert ist, und Antriebsmittel für das Wickelrohr, wobei das Wickelrohr relativ zu der Zentralachse in Längsrichtung bewegbar ist und wobei die Zentralachse (7) mit der Querachse (12) der Sonnenabschirmung (1) einen Winkel (α) aufweist, **dadurch gekennzeichnet, dass** die Sonnenabschirmung zwei entgegengesetzte seitliche Ränder aufweist, die mit Profilen (2, 3) versehen sind, die gleitend in jeweiligen Führungen (4, 5) aufgenommen sind, die sich entlang der seitlichen Ränder der Sonnenabschirmung erstrecken, wobei die Profile (2, 3) der seitlichen Sonnenabschirmungsränder eine komplementäre obere und untere Seite aufweisen, so dass die obere und die untere Seite der Profile von aufeinanderfolgenden Wicklungen der Sonnenabschirmung (10) auf dem Wicklungsrohr (6) zusammenwirken, und wobei der Winkel (α) größer als 0°, jedoch nicht größer als 5° ist.

2. Sonnenabschirmeinrichtung gemäß Anspruch 1, wobei das Profil (2) an einem seitlichen Rand als ein nach oben abgewinkelter Abschnitt geformt ist, während das Profil (3) an dem entgegengesetzten seitlichen Rand als ein nach unten abgewinkelter Abschnitt geformt ist.

3. Sonnenabschirmeinrichtung gemäß Anspruch 1 oder 2, wobei der Winkel (α) 2° beträgt.

4. Sonnenabschirmeinrichtung gemäß einem der vorhergehenden Ansprüche, wobei eine Antriebskraft zum Bewegen des Wickelrohrs in Längsrichtung relativ zu der Zentralachse durch Zusammenwirkamßnahmen an dem Wickelrohr (6) und der Zentralachse (7) erzeugt wird.

5. Sonnenabschinrichtung gemäß Anspruch 4, wobei die Zusammenwirkamßnahmen Gewindemittel aufweisen.

## Revendications

1. Ensemble de store, comprenant un store (1) et un mécanisme d'enroulement de store comprenant un tube d'enroulement (6) monté de manière à tourner autour d'un axe central (7) et un moyen d'entraînement pour ledit tube d'enroulement, le tube d'enroulement pouvant se déplacer longitudinalement par rapport à l'axe central, et dans lequel l'axe central (7) inclut un angle (α) par rapport à l'axe transversal (12) du store (1),
**caractérisé en ce que** le store a deux bords latéraux opposés qui sont pourvus de profilés (2, 3) qui sont logés de manière coulissante dans des guides (4, 5) correspondants s'étendant le long desdits bords latéraux du store, dans lequel les profilés (2, 3) des bords latéraux du store ont des côtés supérieur et inférieur complémentaires, de sorte que les côtés supérieur et inférieur desdits profilés des enroulements ultérieurs du store (1) sur le tube d'enroulement (6) coopèrent, et dans lequel l'angle (α) est supérieur à 0° et pas supérieur à 5°.

2. Ensemble de store selon la revendication 1, dans lequel le profilé (2) sur un bord latéral a la forme d'une section inclinée vers le haut, tandis que le profilé (3) sur le bord latéral opposé a la forme d'une section inclinée vers le bas.

3. Ensemble de store selon la revendication 1 ou 2, dans lequel ledit angle (α) est de 2°.

4. Ensemble de store selon l'une des revendications précédentes, dans lequel une force d'entraînement pour déplacer le tube d'enroulement longitudinalement par rapport à l'axe central est produite par des moyens coopérants sur ledit tube d'enroulement (6) et ledit axe central (7).

5. Ensemble de store selon la revendication 4, dans lequel lesdits moyens coopérants comprennent des moyens filetés.
